Europäisches Patentamt

European Patent Office

Office européen des brevets

(11) Veröffentlichungsnummer: **0 232 782**
**B1**

(12) # EUROPÄISCHE PATENTSCHRIFT

(45) Veröffentlichungstag der Patentschrift:
20.12.89

(21) Anmeldenummer: 87101020.3

(22) Anmeldetag: 26.01.87

(51) Int. Cl.⁴: **F 25 B 9/02,** F 01 D 5/18,
F 02 C 7/14

(54) Verfahren und Vorrichtung zur Kühlung der Schaufeln von termischen Turbomaschinen.

(30) Priorität: 04.02.86 DE 3603350

(43) Veröffentlichungstag der Anmeldung:
19.08.87 Patentblatt 87/34

(45) Bekanntmachung des Hinweises auf die Patenterteilung:
20.12.89 Patentblatt 89/51

(84) Benannte Vertragsstaaten:
AT BE CH DE ES FR GB GR IT LI NL SE

(56) Entgegenhaltungen:
EP-A- 0 130 038
DE-C- 605 691
DE-C- 858 260
FR-A- 2 375 910
GB-A- 829 727
US-A- 2 893 214
US-A- 2 955 432
US-A- 3 173 273
US-A- 3 361 336

(73) Patentinhaber: MAR-RESEARCH Gesellschaft für
Forschung und Entwicklung mbH, Grosse
Theaterstrasse 42, D-2000 Hamburg 36 (DE)

(72) Erfinder: Sibbertsen, Walter,Prof.Dipl.Phys.,
Joachim-Sahling Weg 109, D-2000 Hamburg 53 (DE)

(74) Vertreter: Schmidt-Bogatzky, Jürgen, Dr. Ing.,
Schlossmühlendamm 4, D-2100 Hamburg 90 (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zu Kühlung thermisch belasteter Bauelemente von Strömungsmaschinen, eine Vorrichtung zur Durchführung des Verfahrens sowie die Ausbildung thermisch belasteter Schaufeln, bei denen an der inneren Schaufelwand Kühlluft vorbeiströmt und durch kleine Durchbrechungen in dem Schaufelmantel im Grenzschichtbereich austritt.

Bei stationären und in Land-, See- und Luftfahrzeugen als Antriebsaggregate installierten Strömungsmaschinen besteht häufig das Problem, daß bestimmte Bauelemente, wie Schaufeln und Brennkammern, durch einen Gasstrom hoher Temperatur thermisch hoch belastet werden. In einem Flugzeugtriebwerk zum Beispiel werden die Schaufeln des Rotors und Stators von einem heißen Gasstrom angeströmt, wobei in der Startphase die Temperatur zum Beispiel 1380°C und im Reiseflug 1170°C betragen kann. Die Schaufeln müssen bei diesen Temperaturen gekühlt werden, damit sie durch die thermische Belastung nicht beschädigt oder gar zerstört werden. Zu diesem Zweck wird zum Beispiel vom Hochdruckkompressor Kühlluft mit einer Temperatur von 585°C in der Startphase und 470°C im Reiseflug bei einem Druck von 29 bar bzw. 11 bar abgezapft in die Schaufeln geleitet.

In der EP-A-0 130 038 ist eine derartige Schaufel für Gasturbinen beschrieben. Im Schaufelfuß wird Kühlluft in die Schaufel eingeleitet. Das Schaufelblatt ist in verschiedene Kanäle unterteilt, die zum Teil so miteinander verbunden sind, daß die Kühlluftströmung in der Schaufel mehrfach umgelenkt wird, bis sie durch Durchbrechungen in dem Schaufelmantel wieder austritt und dem an der Schaufel vorbeiströmenden Gasstrom zugemischt wird. Bei diesem Prinzip der Schaufelkühlung besteht der Nachteil, daß die Kühlleistung beschränkt ist, da die vom Hochdruckkompressor abgezapfte Kühlluft bereits mit einer verhältnismäßig hohen Temperatur in die Schaufeln eintritt.

Zur Kühlung eines Gasstromes ist es ferner bekannt, ein Wirbelrohr zu verwenden. Ein solches ist in der US-A-2 955 432 beschrieben. Eine Temperaturabsenkung des Gasstromes wird durch Expansion in dem Wirbelrohr erzielt. Dieses Wirbelrohr weist ein zentrales Wirbelkammergehäuse mit einem tangential angeordneten Gaseinlaßstutzen auf. Koaxial zur Mittelachse des Wirbelkammergehäuses sind Strömungsaustrittsöffnungen vorgesehen, von denen die eine als blendenartige Einströmöffnung für den Kaltluftausgang ausgebildet und die andere über einen Diffusor mit anschließendem Konus mit einem Ventil verbunden ist und den Warmluftausgang bildet. Die Warmlufttemperatur wird durch einen im Diffusor angeordneten Wärmetauscher verringert. Hierdurch soll insgesamt eine größere Kühlwirkung bezüglich des einströmenden Gases erzielt werden.

Die Aufgabe der Erfindung besteht darin, ein Verfahren und eine Vorrichtung aufzuzeigen, mittels derer zur Kühlung thermisch belasteter Bauelemente von Strömungsmaschinen die spezifische Kühlleistung erhöht wird, ohne daß hierzu besondere energetisch angetriebene Kühlaggregate erforderlich sind.

Erfindungsgemäß erfolgt die Lösung der Aufgabe dadurch, daß die Kühlluft tangential in ein aus einer zylindrischen Wirbelkammer mit zwei endabschnittseitigen Drosselgliedern bestehendes Wirbelrohr zwischen den Drosselgliedern im Bereich des einen Drosselgliedes mit einem blendenartig ausgebildeten Einströmabschnitt einströmt und in zwei Teilkühlluftströme aufgeteilt wird, von denen der eine Teilkühlluftstrom nach Durchströmen des Drosselglieds mit blendenartigem Einströmabschnitt gegenüber der Temperatur der in das Wirbelrohr einströmenden Kühlluft abgekühlt der zu kühlenden Wandfläche zugeführt und der andere Teilkühlluftstrom aus dem Bereich des Wirbelrohrs abgeleitet wird. Die zu kühlenden Bauelemente können Brennkammern und/oder die Schaufeln sein. Der über das eine Drosselglied ausströmende erwärmte Teilkühlluftstrom kann in den Hauptgasstrom geleitet werden. Hierdurch werden die Standzeit der Schaufeln erhöht und die Betriebskosten der Strömungsmaschine gesenkt. Durch diese Lösung kann zum Beispiel bei Flugzeugtriebwerken die Temperatur des Hauptgasstromes erhöht werden, wodurch der Wirkungsgrad des Triebwerks verbessert wird. Alternativ ist es möglich, die Brennkammertemperatur und damit den Wirkungsgrad der Strömungsmaschine zu erhöhen oder die Schaufeln näher an der Brennkammerdüse anzuordnen, so daß eine Verkleinerung und Gewichtsminderung der Strömungsmaschine erzielt wird, oder für die Schaufeln einen weniger aufwendigen Werkstoff zu verwenden, was Kosteneinsparungen bewirkt.

Es ist auch möglich, ein Wirbelrohr mit einem Diffusor zu verwenden, wie es in der US-A-2 955 432 beschrieben ist. Dieses hat die Eigenschaft, daß die an den beiden Endabschnitten ausströmende Luft kälter ist als die dem Wirbelrohr zugeführte Luft. Die Länge dieses Wirbelrohrs sowie die Größe des Diffusorwinkels sind abhängig von der Temperatur des durchgesetzten Gases sowie von der Größe der gewünschten Temperaturabsenkung. Bei dem Wirbelrohr mit Diffusor wird die Kühlluft ebenfalls tangential in einen zylindrischen Abschnitt des Wirbelrohrs eingebracht, worauf dann ein Teilkühlluftstrom durch den Diffusor und der verbleibende Teilkühlluftstrom durch ein blendenartiges Drosselglied strömt. Die abgekühlten Teilkühlluftströme können wieder vereinigt und den zu kühlenden Wandflächen zugeführt werden.

Weitere Merkmale der Erfindung werden in den abhängigen Ansprüchen beschrieben sowie anhand der in den Zeichnungen dargestellten Ausführungsbeispiele näher erläutert.

Es zeigt:

Fig. 1 eine Vorrichtung zur Kühlung von Schaufeln in einer schematischen Ansicht,

Fig. 2 und 3 zwei Schaufeln in schematischen Seitenansichten im Schnitt,

Fig. 4 eine weitere Schaufel in einer schematischen Seitenansicht im Schnitt,

Fig. 5 eine weitere Ausführung eines Wirbelrohrs zur Kühlung thermisch belasteter Bauteile von Strömungsmaschinen,

Fig. 6a das Wirbelkammergehäuse des Wirbelrohrs nach Fig. 5 in einer Draufsicht und Seitenansicht.

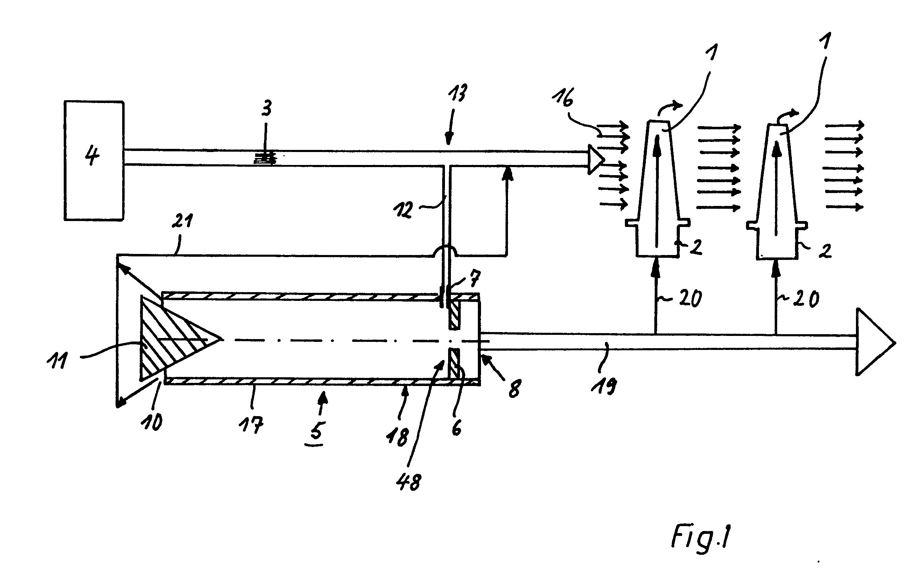

In Fig. 1 ist eine Vorrichtung zur Kühlung von Schaufeln 1 schematisch dargestellt. Von einer Kühlluftquelle 4 wie zum Beispiel einem Kompressor wird über den Hauptgasstromkanal 13 mittels eines Kühlluftkanals 12 Kühlluft tangential in das Rohr 18 eines Wirbelrohrs 5 im Bereich der Blende 6 eingeblasen. Das Rohr 18 bildet eine Wirbelkammer 17. Durch den Hauptgasstromkanal 13 kann zum Beispiel Kompressorluft strömen, der bei Flugzeugtriebwerken als Kühlluftstrom 3 dient. Die tangential ausgerichteten Einströmdüsen 7 im Bereich der Blende 6 bewirken eine spiralige Lufteinführung in das Rohr 18 des Wirbelrohrs 5. Dieses besteht neben der Blende 6 aus einem düsenartigen Drosselglied 11, die an dem der Blende 6 abgewandten Endabschnitt des Rohres 18 ausgebildet ist. Der in dem Wirbelrohr 5 gebildete wirbelförmige Luftstrom besteht aus einem Kern und einer äußeren Zone, wobei der Kern niedrigere und die äußere Zone höhere Temperaturen besitzt als die Eingangstemperatur der durch die Einströmdüsen 7 eintretenden Kühlluft. Das kältere Gas verläßt das Wirbelrohr 5 durch die Blende 6 direkt neben den Einströmdüsen 7. An dem Kaltluftausgang 8 ist eine Rohrleitung 19 angeordnet, die mittels Anschlußstücken 20 mit jeweils einer Schaufel 1 verbunden sind. Der Warmluftausgang 10 ist an dem düsenartigen Drosselglied 11 ausgebildet und zum Beispiel mittels eines Rohres 21 mit dem Hauptgasstromkanal 13 verbunden.

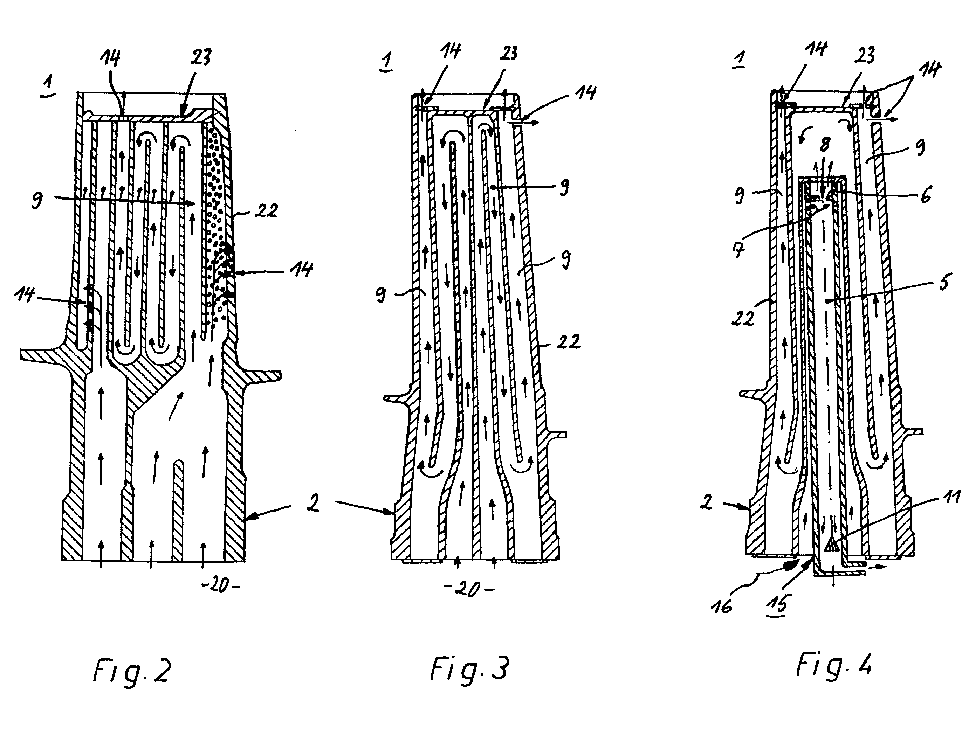

Als Schaufeln 1 können solche verwendet werden, wie sie für die Hoch-, Mittel- und Niederdruckbereiche von Strömungsmaschinen üblich sind (Fig. 2 und 3). Die Schaufeln 1 bestehen aus einem Hohlkörper, in dem ein labyrinthartig geformter Kühlkanal 9 mit mehreren Strömungsumlenkzonen ausgebildet ist. An definierten Abschnitten des Schaufelmantels 22 und in der Endkappe 23 sind Durchbrechungen 14 ausgebildet, durch die aus der Schaufelkammer die Kühlluft ausströmen kann. Vorzugsweise befinden sich die Durchbrechungen 14 im Bereich der Schaufelnasen, wobei der Druck der austretenden Kühlluft so gewählt wird, daß auf der Außenfläche der jeweiligen Schaufel 1 eine Grenzschichtströmung ausgebildet wird.

Es ist möglich, für die Schaufeln 1 des Rotors und/oder Stators einer Triebwerksstufe jeweils ein Wirbelrohr 5 vorzusehen. Darüber hinaus kann auch jeweils eine Anzahl von Schaufeln 1 des Rotors und/oder Stators einer Triebwerksstufe mit dem Kaltluftausgang eines Wirbelrohrs 5 verbunden werden. Bei größeren Triebwerken ist es zweckmäßig, jeder Schaufel 1 des Rotors und/oder Stators einer Triebwerksstufe ein Wirbelrohr 5 zuzuordnen, so daß der Kaltluftausgang 8 eines Wirbelrohrs 5 nur mit einer Schaufel 1 verbunden ist.

Es ist auch möglich, in jeder Schaufel 1 ein Wirbelrohr 5 auszubilden, das über den Kühlluftkanal 12 mit Kühlluft aus dem Kühlluftstrom 3 beaufschlagt wird. Auch bei dieser Ausführungsform tritt die nach Durchströmen der Blende 6 weiter abgekühlte Luft in die Kühlkanäle 9 der Schaufel 1 ein und kühlt den Schaufelmantel 22. Die ausströmende Kühlluft strömt durch die Durchbrechungen 14 aus der Schaufel 1 aus und kann zum Beispiel dem Gasstrom zugemischt werden. Die durch den drosselseitigen Warmluftausgang 10 ausströmende Warmluft wird abgeführt und kann ebenfalls zum Beispiel dem Gasstrom beigemischt werden.

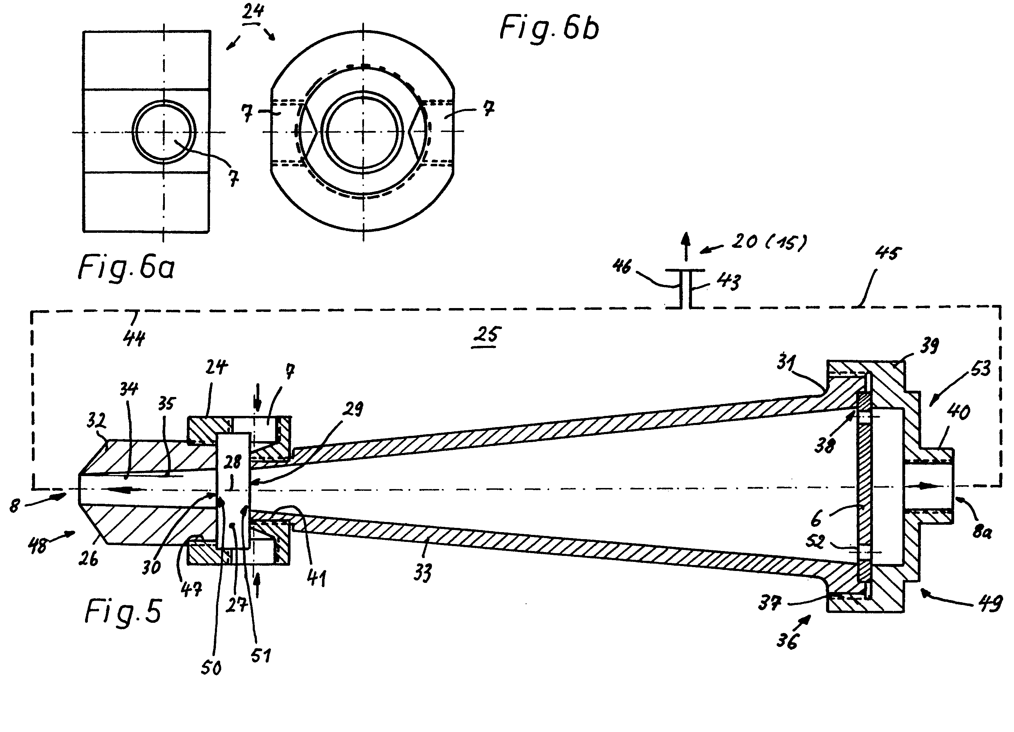

Wie in Fig. 4 dargestellt, kann das Wirbelrohr 5 in einem Einschubstück 15 ausgebildet sein, das in eine Schaufel 1 eingesetzt ist. Die am Kaltluftausgang 8 austretende Kühlluft wird in die Kühlkanäle 9 eingeleitet. Die aus dem Warmluftausgang 10 austretende Warmluft wird dem Hauptgasstromkanal 13 in dem Bereich zugeführt, in dem der Hauptgasstrom 16 strömt.

In ähnlicher Weise kann mittels eines oder mehrerer Wirbelrohre 5 auch eine doppelwandige Ringbrennkammer gekühlt werden. In diesem Fall wird der Kühlluftstrom in den Ringkanal der Ringbrennkammer eingeleitet, der durch Trennstege in besondere Kühlkanäle unterteilt sein kann. Die für das jeweilige Wirbelrohr 5 benötigte Druckluft wird entweder der für die Kühlung der Ringbrennkammer benötigten Kühlluft entnommen oder wie zur Kühlung der Schaufeln 1 beschrieben bereitgestellt.

Nach einer weiteren Ausgestaltung der Erfindung können für die vorbeschriebenen Anwendungsfälle auch Wirbelrohre 25 verwendet werden, bei denen der Warmluftausgang 10 durch einen Diffusor 33 in einen Kaltluftausgang 8a verändert wird. Das in den Fig. 5 bis Fig. 6b schematisch dargestellte Wirbelrohr 25 hat den Vorteil, daß die an den Endabschnitten des Wirbelrohrs 25 ausströmende Luft kälter ist als die dem Wirbelrohr 25 zugeführte Luft. Die Länge des Wirbelrohrs 25 sowie der Diffusorwinkel sind abhängig von der vorgegebenen Druckdifferenz, vom Gasdurchsatz, von der Temperatur des eingebrachten Gases und von der gewünschten Temperaturabsenkung. Das in Fig. 5 dargestellte Wirbelrohr 25 weist ein Wirbelkammergehäuse 24 auf, in dem ein Wirbelraum 27 ausgebildet ist. Der Wirbelraum 27 steht mit tangential an dem Wirbelkammergehäuse 24 ausgebildeten Einströmdüsen 7 in Verbindung. Der Wirbelraum 27 weist ferner zwei koaxial zur Mittelachse 28 des Wirbelkammergehäuses 24 ausgerichtete Strömungsaustrittsöffnungen 29, 30 auf. Die Strömungsaustrittsöffnung 29 bildet einen blendenartigen Einströmabschnitt 51 eines Diffusors 33, da der Durchmesser der Einströmöffnung des Diffusors 33, also der der Strömungsaustrittsöffnung 29, kleiner ist, als der Durchmesser des Wirbelraums 27. Es ist aber auch, sofern anwendungsbezogen zweckmäßig, möglich den Durchmesser der Strömungsaustrittsöffnung 29 gleich dem Durchmesser des Wirbelraums 27 auszubilden. In diesem Fall würde die Strömungsaustrittsöffnung 29 keinen blendenartigen Einströmabschnitt bilden. Der Diffusor 33 weist einen Gewindezapfen 41 auf, der in das Wirbelkammergehäuse 24 eingeschraubt ist. Die Steigung des Diffusors 33 kann ein Verhältnis von 1:10 betragen. An dem Endabschnitt 36 des Diffusors 33 ist ein Flansch 31 mit einem Außengewinde 37 ausgebildet. In dem Flansch 31 ist ferner eine Ausnehmung 38 ausgebildet, die zur Aufnahme einer Blende 6 dient. Die Blende 6 ist passend in die Ausnehmung 38 eingesetzt und wird von einem Flansch 39 in der Ausnehmung 38 gehalten, der auf den Flansch 31 aufgeschraubt ist. an dem Flansch 39 ist ein Rohrstutzen 40 als Kaltluftausgang 8a ausgebildet. Das durch den Flansch 39 mit Rohrstutzen 40 und die Blende 6 gebildete blendenartige Drosselglied 49 kann auch anders ausgebildet sein. So ist es möglich, nur eine Blende 6 oder aber nur einen Rohreinlauf 53 mit Flansch 39 und Rohrstutzen 40 vorzusehen. Die Strömungsaustrittsöffnung 30 bildet den blendenartigen Einströmabschnitt 50 eines blendenartigen Drosselglieds 48, das durch eine Düse 32 gebildet ist. Der Düsenkörper 26 ist in eine Ausnehmung 47 des Wirbelkammergehäuses 24 eingeschraubt. Der durch die Strömungsaustrittsöffnung 30 strömende Teilluftstrom wird durch den Düsenkanal 34 der Düse 32 zum Kaltluftausgang 8 abgeführt. Der Düsenwinkel 35 kann z.B. zwischen 3 und 5 Grad betragen.

## Patentansprüche

1. Verfahren zur Kühlung thermisch belasteter Bauelemente von Strömungsmaschinen, bei dem Kühlluft an den thermisch beaufschlagten Wandflächen der Bauelemente vorbeiströmt, dadurch gekennzeichnet, daß die Kühlluft tangential in ein aus einer zylindrischen Wirbelkammer mit zwei endabschnittseitigen Drosselgliedern bestehendes Wirbelrohr zwischen den Drosselgliedern im Bereich des einen Drosselglieds mit einem blendenartig ausgebildeten Einströmabschnitt einströmt und in zwei Teilkühlluftströme aufgeteilt wird, von denen der eine Teilkühlluftstrom nach Durchströmen des Drosselglieds mit blendenartigem Einströmabschnitt gegenüber der Temperatur der in das Wirbelrohr einströmenden Kühlluft abgekühlt der zu kühlenden Wandfläche zugeführt und der andere Teilkühlluftstrom aus dem Bereich des Wirbelrohrs abgeleitet wird.

2. Verfahren nach Anspruch 1, dadurch gekennzeichnet, daß der andere Teilkühlluftstrom durch ein düsenartig ausgebildetes Drosselglied strömt und gegenüber der Temperatur der in das Wirbelrohr einströmenden Kühlluft erwärmt aus dem Wirbelrohr ausströmt.

3. Verfahren nach Anspruch 1, dadurch gekennzeichnet, daß der andere Teilkühlluftstrom durch ein als Diffusor ausgebildetes Drosselglied mit einer gegenüber der Temperatur der in das Wirbelrohr einströmenden Kühlluft gleichen oder verminderten Temperatur aus dem Wirbelrohr ausströmt.

4. Verfahren nach Anspruch 3, dadurch gekennzeichnet, daß der andere Teilkühlluftstrom durch einen Diffusor mit einem blendenartig ausgebildeten Einströmabschnitt und/oder einem drosselartig ausgebildeten Ausströmabschnitt aus dem Wirbelrohr ausströmt.

5. Verfahren nach Anspruch 1, 3 und 4, dadurch gekennzeichnet, daß die aus dem Wirbelrohr austretenden Teilkühlluftströme zu einem Kühlluftstrom vereinigt und den zu kühlenden Wandflächen zugeführt werden.

6. Verfahren nach Anspruch 2, dadurch gekennzeichnet, daß der über durch das Drosselglied ausströmende erwärmte Teilkühlluftstrom in den Hauptgasstrom geleitet wird.

7. Verfahren nach einem der Ansprüche 1, 3 bis 5 zur Kühlung thermisch belasteter Schaufeln von Strömungsmaschinen, bei dem Kühlluft in die Schaufeln eingeleitet wird und durch Kanäle an der Innenwand des Schaufelmantels vorbeiströmt und durch kleine Durchbrechungen in dem Schaufelmantel im Grenzschichtbereich austritt, dadurch gekennzeichnet, daß der aus dem Wirbelrohr austretende abgekühlte Teilkühlluftstrom oder Kühlluftstrom durch die Schaufeln des Rotors und/oder Stators einer Strömungsmaschinenstufe geführt wird.

8. Verfahren nach Anspruch 7, dadurch gekennzeichnet, daß jeweils eine Anzahl von Schaufeln des Rotors und/oder Stators einer Strömungsmaschinenstufe von dem abgekühlten Teilkühlluftstrom oder Kühlluftstrom eines Wirbelrohrs durchströmt werden.

9. Verfahren nach Anspruch 7, dadurch gekennzeichnet, daß jede Schaufel des Rotors und/oder Stators einer Strömungsmaschinenstufe mit dem abgekühlten Teilluftstrom oder Kühlluftstrom eines Wirbelrohrs durchströmt wird.

10. Verfahren nach Anspruch 9, dadurch gekennzeichnet, daß in jeder Schaufel des Rotors und/oder Stators einer Strömungsmaschinenstufe ein Wirbelrohr eingesetzt und mit Kühlluft beaufschlagt wird, wobei der aus dem Wirbelrohr austretende abgekühlte Teilkühlluftstrom oder Kühlluftstrom die Schaufel durchströmt.

11. Verfahren nach den Ansprüchen 1 bis 10, dadurch gekennzeichnet, daß als dem Wirbelrohr zuzuführende Kühlluft Fanluft und/oder Stauluft verwendet wird.

12. Verfahren nach den Ansprüchen 1, 3 bis 11 zur Kühlung von doppelwandig ausgebildeten Ringbrennkammern, dadurch gekennzeichnet, daß der aus einem Wirbelrohr austretende Teilkühlluftstrom oder Kühlluftstrom in den Ringkanal der Ringbrennkammer eingeleitet und nach Vorbeiströmen an der Innenwand der Ringbrennkammer abgeleitet oder dem durch die Ringbrennkammer erwärmten Luftstrom zugemischt wird.

13. Vorrichtung zur Kühlung thermisch belasteter Bauelemente von Strömungsmaschinen, die mindestens eine Brennkammer mit einem dieser nachgeschalteten Hauptgasstromkanal (13) und eine Kühlluftquelle (4) aufweisen, deren Kühlluft über einen Kühlluftkanal (12) den Bauelementen zugeführt und an deren thermisch beaufschlagten Wandflächen vorbeiströmt, dadurch gekennzeichnet, daß die Kühlluftquelle (4) mit einem Wirbelrohr (5, 25) verbunden ist, in dem vor einem blendenartigen Drosselglied (48) tangential ausgerichtete Einströmdüsen (7) mit Kühlluft ausgebildet sind, deren Kaltluftausgang (8) hinter dem blendenartigen Drosselglied (48) mit Kühlkanälen (9) der thermisch belasteten Bauelemente und deren Warmluftausgang (10) mit dem Kühlkanal (12) oder dem Hauptgasstromkanal (13) hinter der Brennkammer verbunden ist.

14. Vorrichtung nach Anspruch 13, dadurch gekennzeichnet, daß der Wirbelraum (27) des Wirbelkammergehäuses (24) mit den tangential angeordneten Einströmdüsen (7) zwei koaxial zur Mittelachse (28) des Wirbelkammergehäuses (24) angeordnete Strömungsaustrittsöffnungen (29, 30) aufweist, von denen die eine mit einem blendenartigen Drosselglied (48) und die andere über einen Diffusor (33) mit einem dem Warmluftausgang zugeordneten Drosselglied verbunden ist, und daß der Diffusor (33) einen blendenartigen Einströmabschnitt (51) aufweist.

15. Vorrichtung nach Anspruch 13, dadurch gekennzeichnet, daß das blendenartige Drosselglied (48) als Blende (6) oder Düse (32) mit blendenartigem Einströmabschnitt (50) ausgebildet ist.

16. Vorrichtung nach Anspruch 13, dadurch gekennzeichnet, daß der Warmluftausgang (10) als düsenartiges Drosselglied (11) ausgebildet ist.

17. Vorrichtung nach Anspruch 14, dadurch gekennzeichnet, daß an dem ausströmseitigen Endabschnitt (36) des Diffusors (33) ein blendenartiges Drosselglied (49) angeordnet ist.

18. Vorrichtung nach Anspruch 17, dadurch gekennzeichnet, daß das Drosselglied (49) als Blende (6) mit einer oder mehreren Durchbrechungen (52) und/oder als Rohreinlauf (53) ausgebildet ist, dessen Rohrstutzen (40) einen gegenüber dem Ausströmquerschnitt des Diffusors (33) verringerten Querschnitt aufweist und der in einen den Endabschnitt (36) des Diffusors (33) abdeckenden Flansch (39) eingesetzt ist.

19. Vorrichtung nach Anspruch 14, dadurch gekennzeichnet, daß der hinter dem blendenartigen Drosselglied (49) ausgebildete Kaltluftausgang (8a) und der Kaltluftausgang (8) des blendenartigen Drosselglieds (48) zu einem Kühlluftgemischausgang (43) verbunden sind.

20. Vorrichtung nach Anspruch 13 bis 19, dadurch gekennzeichnet, daß jeweils eine vorgegebene Anzahl von Schaufeln (1) mit Kühlkanälen (9) des Rotors und/oder Stators einer Strömungsmaschinenstufe mit dem Kaltluftausgang (8) oder Kühlluftgemischausgang (43) eines Wirbelrohrs (5) verbunden sind.

21. Vorrichtung nach Anspruch 13 bis 19, dadurch gekennzeichnet, daß jede Kühlkanäle (9) aufweisende Schaufel (1) des Rotors und/oder Stators einer Strömungsmaschinenstufe mit dem Kaltluftausgang (8) oder Kühlluftgemischausgang (43) eines Wirbelrohrs (5) verbunden ist.

22. Schaufel für eine Strömungsmaschine, die beim Betrieb der Strömungsmaschine thermisch belastet ist und mittels durch in der Schaufel (1) ausgebildete Kühlkanäle (9) mit Kühlluft kühlbar ist, die durch kleine Durchbrechungen (14) in dem Schaufelmantel (22) austritt, dadurch gekennzeichnet, daß in der Schaufel (1) ein Wirbelrohr (5, 25) angeordnet ist, dessen im Bereich eines blendenartigen Drosselglieds (48) tangential angeordnete Einströmdüsen (7) mit einem Kühlluftkanal (12) verbunden sind, von dessen Kühlluft ein Teilkühlluftstrom nach Durchströmen des blendartigen Drosselglieds (48) weiter abgekühlt in die Kühlkanäle (9) in der Schaufel (1) geleitet und der verbleibende Teilkühlluftstrom durch den Warmluftausgang (10) eines düsenartigen Drosselgliedes (1) als Warmluft austritt und abgeführt wird.

23. Schaufel nach Anspruch 22, dadurch gekennzeichnet, daß der Wirbelraum (27) des Wirbelkammergehäuses (24) des Wirbelrohrs (25) mit tangential ausgerichteten Einströmdüsen (7) zwei koaxial zur Mittelachse (28) des Wirbelkammergehäuses (24) ausgerichtete Strömungsaustrittsöffnungen (29, 30) aufweist, von denen die eine mit einem Diffusor (33) und die andere mit einem blendenartigen Drosselglied (48) verbunden ist.

24. Schaufel nach Anspruch 23, dadurch gekennzeichnet, daß dem Diffusor (33) ein blendenartiger Einströmabschnitt (51) und/oder am ausströmseitigen Endabschnitt (36) ein weiteres blendenartiges Drosselglied (49) angeordnet ist.

25. Schaufel nach Anspruch 22 bis 24, dadurch gekennzeichnet, daß das Wirbelrohr (5, 25) in einem Einschubstück (15) ausgebildet ist, das in eine Schaufel (1) lösbar eingesetzt ist.

## Claims

1. Method for cooling heat-stressed structural elements of turbomachines, in which cooling air flows past the wall-surfaces, subjected to heat, of the said structural elements, characterized in that the cooling air flows tangentially into a vortex-tube consisting of a cylindrical vortex-chamber, having two choke-elements at the end-sections, at a location between the said choke-elements that is in the vicinity a one of said choke-elements that is provided with an orifice-plate-like inflow-section, and is divided into two partial flows of cooling air, one of which, after flowing through the choke-element with an orifice plate-like inflow-section, is cooled in relation to the temperature of the cooling air flowing into the said vortex-tube and is fed to the wall surface to be cooled, while the other partial flow of cooling air is led away from the vicinity of the structural-element area.

2. Method according to claim 1, characterized in that the other partial flow of cooling air flows through a nozzle-like choke-element and flows out of the vortex-tube heated in relation to the temperature of the cooling air flowing into the said vortex-tube.

3. Method according to claim 1, characterized in that other partial flow of cooling air flows out of the vortex-tube, through a choke-element in the form of a diffusor, at a temperature equal to or less than that of the cooling air flowing into the said vortex-tube.

4. Method according to claim 3, characterized in that other partial flow of cooling air flows out of the vortex-tube through a diffusor having an orifice-plate-like inflow-section and/or a choke-like outflow-section.

5. Method according to claim 1, 3 and 4, characterized in that the partial flows of cooling air emerging from the vortex-tube are united into a single flow or cooling air which is passed to the wall-surfaces to be cooled.

6. Method according to claim 2, characterized in that the partial flow of heated cooling air flowing out through the choke-element is passed to the main flow of gas.

7. Method according to one of the claims 3 to 5, for cooling heat-stressed blades of turbomachines, in which cooling air is introduced into the blades, flows through ducts past the inner wall of the blade-casing, and emerges through small openings in the said blade-casing in a boundary-layer area, characterized in that the partial flow of cooled cooling air emerging from the vortex-tube, or the flow of cooling air, passes through the rotor-and/or stator-blades of a turbomachine stage.

8. Method according to claim 7, characterized in that partial flow of cooled cooling air, or the flow of cooling air, from a vortex-tube flows through a number of rotor- and/or stator-blades of a turbomachine stage.

9. Method according to claim 7, characterized in that partial flow of cooling air, or the flow of cooling air, from a vortex-tube flows through each rotor- and/or stator-blade of a turbomachine stage.

10. Method according to claim 9, wherein in each rotor- and/or stator-blade of a turbomachine stage, a vortex-tube is used and is acted upon by cooling air, the partial flow of cooled cooling air, or the flow of cooling air, emerging from the said vortex-tube, flowing through the blades.

11. Method according to claim 1, wherein the fan-air and/or ram-air is used as the cooling air to be fed to the vortex-tube.

12. Method according to claims 1, 3 to 11, for cooling double-walled annular combustion-chambers, characterized in that the partial flow of cooling air, or the flow of cooling air, emerging from a vortex-tube is introduced into the circular channel of the annular comubstion-chamber and, after flowing past the inner wall of the said combustion-chamber, is led away or is mixed with the flow of air heated by the said annular combustion-chamber.

13. Apparatus for cooling heat-stressed structural elements of turbomachines, with at least one combustion-chamber with one main gas-flow channel (13) after the combustion-chamber and a source (4) of cooling air, the cooling air of which is admitted through a cooling-air channel (12) to the structural elements and passes their heat-admitted walls, characterized in that the source (4) of cooling air is connected to a vortex-tube (5) in which tangentially directed inflow-nozzles (7) for cooling air are provided in front of an orifice-plate-like-choke-element (48), the cold air outlet (8) of said vortex-tubes after said choke-element (48) is connected to cooling channels (9) in the heat-stressed structural element, and the hot-air outlet (10) of said vortex-tube (5) is connected to the cooling-air channel (12) or to the main gas-flow channel (13) after the combustion-chamber.

14. Apparatus according to claim 13, characterized in that the vortex-space (27) of the vortex-chamber housing (24) with inflow-nozzles (7) arranged tangentially, comprises two flow-outlet apertures (29, 30) arranged coaxially with the centre line (28) of the vortex-chamber housing (24), one of said apertures being associated with an orifice-plate-like choke-element (48) and the other via a diffusor (33) with a choke-element being associated with the hot-air outlet, said diffusor (33) having an orifice-plate-like inflow-section (51).

15. Apparatus according to claim 13, characterized in that the choke-element (48) is in the form of an orifice-plate (6) or of a nozzle (32) having an orifice-plate-like inflow-section (50).

16. Apparatus according to claim 14, characterized in that the hot air outlet (10) is formed as an nozzle-like choke-element (11).

17. Apparatus according to claim 14, characterized in that an orifice-plate-like choke-element (49) is arranged at the outflow end-section (36) of the diffusor (33).

18. Apparatus according to claim 17, characterized in that the choke-element (49) is in the form of an orifice-plate (6) with one or more openings (52) and/or in the form of a tubular inlet (53), the tubular connection (40) of which has a cross-section which is smaller than the outflow cross-section of the diffusor (33), and which is inserted into a flange (39) covering the end-section (36) of the said diffusor (33).

19. Apparatus according to claim 14, characterized in that the cold-air outlet (8a) arranged after the orifice-plate-like choke-element (49), and the cold-air outlet (8) from the orifice-plate-like choke-element (48), are connected together to form a mixed cooling-air outlet (43).

20. Apparatus according to claims 13 to 19, characterized in that a predetermined number of rotor- and/or stator-blades (1), comprising cooling channels (9), of a turbo-machine stage are connected to the cold-air outlet (8), or to the mixed cooling-air outlet (43), of a vortex-tube (5).

21. Apparatus according to claim 13 to 19, characterized in that each rotor- and/or stator-blade (1), comprising cooling channels (9) of a turbomachine stage, is connected to the cold-air outlet (8), or to the mixed cooling-air outlet (43), of a vortex-tube (5).

22. Blade for a turbomachine which, when the said engine is in operation, is heat-stressed and which is adapted to be cooled with cooling air through cooling channels (10) formed in the said blade (1), the said cooling air emerging through small openings (14) in the casing (22) of the blade, characterized in that a vortex-tube (5, 25) is arranged in the blade (1), the inflow-nozzles (7) of the vortex-tube being, arranged tangentially in the vicinity of an orifice-plate-like choke-element (49), and being connected to a cooling-air channel (12), a partial flow of cooling air therefrom, after flowing through the said choke-element (48) and being cooled still further, is passed into cooling channels (49) in the said blade (1), while the remaining partial flow of cooling air emerges through the hot-air outlet (10) of a nozzle-like choke-element 25 (11) as hot air.

23. Blade according to claim 22, characterized in that the vortex-space (27) of the vortex-chamber housing (24) with tangentially aligned inflow-nozzles (7) comprises two flow-outlet apertures (29, 30) arranged coaxially with the centreline (28) of the vortex-chamber housing (24), one of the said apertures (29, 30) being connected to a diffusor and the other to an orifice-plate-like choke-element (48).

24. Blade according to claim 23, characterized in that in the diffusor (33) is arranged an orifice-plate-like inflow-section (51) and/or on the outflow side of the end-section (36) is a further orifice-plate-like choke-element (49).

25. Blade according to claim 22 to 24, characterized in that the vortex-tube (5, 25) is formed in an insert-piece (15) which is inserted detachably into a blade (1).

## Revendications

1. Procédé de refroidissement d'éléments de structure de turbomachines, soumis à une contrainte thermique, dans lequel l'air de refroidissement afflue sur les parois des composants soumis aux effets thermiques, caractérisé en ce que l'air de refroidissement pénètre tangentiellement dans un conduit à turbulence, constitué d'une chambre à turbulence cylindrique munie de deux éléments d'étranglement situés dans le segment d'extrémité, entre les éléments d'étranglement, au voisinage de l'un des éléments d'étranglement, avec un segment d'admission conçu sous forme d'obturateur, et est réparti en deux courants partiels d'air de refroidissement, parmi lesquels l'un des courants partiels d'air de refroidissement, après avoir traversé l'élément d'étranglement muni d'un segment d'admission conçu sous forme d'obturateur, arrive sur la paroi à refroidir en étant refroidi par rapport à la température de l'air de refroidissement affluent dans le conduit à turbulence, et l'autre courant partiel d'air de refroidissement est éloigné du voisinage du conduit de refroidissement.

2. Procédé selon la revendication 1, caractérisé en ce que l'autre courant partiel d'air de refroidissement traverse un élément d'étranglement et quitte le conduit à turbulence en étant réchauffé par rapport à la température de l'air de refroidissement affluent dans le conduit à turbulence.

3. Procédé selon la revendication 1, caractérisé en ce que l'autre courant partiel d'air de refroidissement sort du conduit à trubulence à travers un élément d'étranglement conçu sous la forme d'un diffuseur, à une température identique ou réduite par rapport à la température de l'air de refroidissement pénétrant dans le conduit à turbulence.

4. Procédé selon la revendication 3, caractérisé en ce que l'autre courant partiel d'air de refroidissement sort du conduit à turbulence à travers un diffuseur ayant un segment d'admission en forme d'obturateur et/ou à travers un segment de sortie conçu sous forme d'étranglement.

5. Procédé selon les revendications 1, 3 et 4, caractérisé en ce que les courants partiels de refroidissement sortant du conduit à turbulence sont réunis en un courant de refroidissement et amené vers la paroi à refroidir.

6. Procédé selon la revendication 2, caractérisé en ce que le courant partiel d'air de refroidissement réchauffé sortant par l'élément d'étranglement est amené dans le courant gazeux principal.

7. Procédé selon l'une quelconque des revendications 1, 3 à 5, pour le refroidissement d'aubes de turbomachines, soumises à une contrainte thermique, dans lequel l'air de refroidissement est introduit dans les aubes et afflue à travers des conduits sur la paroi intérieure de l'enveloppe des aubes et sort dans la zone de la couche limite à travers des découpures de l'enveloppe des aubes, caractérisé en ce que le courant partiel d'air de refroidissement ou courant d'air de refroidissement refroidi sortant du conduit à turbulence est amené à travers les aubes du rotor et/ou du stator d'un étage de turbomachine.

8. Procédé selon la revendication 7, caractérisé en ce que chaque fois un certain nombre d'aubes du rotor et/ou du stator d'un étage de turbomachine sont traversés par le courant partiel d'air de refroidissement ou courant d'air de refroidissement refroidi d'un conduit à turbulence.

9. Procédé selon la revendication 7, caractérisé en ce que chaque aube du rotor et/ou du stator d'un étage de turbomachine est traversée par le courant partiel d'air de refroidissement ou courant d'air de refroidissement refroidi d'un conduit à turbulence.

10. Procédé selon la revendication 9, caractérisé en ce que dans chaque aube du rotor et/ou du stator d'un étage de turbomachine, un conduit à turbulence est mis en oeuvre et reçoit de l'air de refroidissement, le courant partiel d'air de refroidissement refroidi ou courant d'air de refroidissement, sortant du conduit à turbulence, étant admis à travers l'aube.

11. Procédé selon les revendications 1 à 10, caractérisé en ce que comme air de refroidissement devant être amené dans le conduit à turbulence, on utilise de l'air de ventilateur et/ou de l'air de retenue.

12. Procédé selon les revendications 1, 3 à 11, pour le refroidissement de chambres de brûleurs à couronne à double parois, caractérisé en ce que le courant partiel d'air de refroidissement refroidi ou courant d'air de refroidissement, sortant du conduit à turbulence, est amené dans le conduit annulaire du brûleur à couronne et après affluence sur la paroi intérieure de la chambre du brûleur à couronne, est évacué ou mélangé au courant d'air réchauffé à travers la chambre du brûleur à couronne.

13. Dispositif de refroidissement de composants de turbomachines, soumis à une contrainte thermique, qui présentent au moins une chambre de brûleur avec un conduit principal des gaz (13) monté en aval de celle-ci, et une source d'air de refroidissement (4), dont l'air de refroidissement est amené, à travers un conduit d'air de refroidissement (12), vers les éléments de structure et afflue sur les parois soumises à une contrainte thermique de ces derniers, caractérisé en ce que la source d'air de refroidissement (4) est reliée à un conduit à turbulence (5, 25) dans lequel, devant un élément d'étranglement (48) en forme d'obturateur, des buses d'admission (7) d'air de refroidissement, dirigées tangentiellement, sont prévues, dont la sortie d'air froid (8) est reliée, derrière l'élément d'étranglement (48) en forme d'obturateur, aux conduits de refroidissement (9) des éléments de structure soumis à une contrainte thermique, et dont la sortie d'air chaud (10) est reliée, derrière la chambre de brûleur, au conduit de refroidissement (12) ou au conduit principal de courant gazeux (13).

14. Dispositif selon la revendication 13, caractérisé en ce que l'espace de turbulence (27) de l'enveloppe de la chambre à turbulence (24), avec les buses d'admission (7) disposées tangentiellement, présente deux orifices de sortie de flux (29, 30) disposés coaxialement à l'axe médian (28) de l'enveloppe de la chambre à turbulence (24), l'un d'eux étant relié à un élément d'étranglement (48) en forme d'obturateur et l'autre étant relié, par l'intermédiaire d'un diffuseur (33), à un élément d'étranglement associé à la sortie d'air chaud, et que le diffuseur (33) présente un segment d'admission (51) en forme d'obturateur.

15. Dispositif selon la revendication 13, caractérisé en ce que l'élément d'étranglement (48) en forme d'obturateur est conçu sous forme d'obturateur (6) ou de buse (32) avec un segment d'admission (50) en forme d'obturateur.

16. Dispositif selon la revendication 13, caractérisé en ce que la sortie d'air chaud (10) est conçu sous forme d'élément d'étranglement (11) en forme de buse.

17. Dispositif selon la revendication 14, caractérisé en ce que sur le segment d'extrémité (36) côté sortie du diffuseur (33) est disposé un élément d'étranglement (49) en forme d'obturateur.

18. Dispositif selon la revendication 17, caractérisé en ce que l'élément d'étranglement (49) est conçu sous forme d'obturateur (6) avec une ou plusieurs découpures (52) et/ou comme admission tubulaire (53), dont les tubulures (40) présentent une section réduite par rapport à la section de sortie du diffuseur (33), et est disposé dans une bride (39) recouvrant le segment d'extrêmité (36) du diffuseur (33).

19. Dispositif selon la revendication 14, caractérisé en ce que la sortie d'air froid (8a) formée derrière l'élément d'étranglement (49) en forme d'obturateur et la sortie d'air froid (8) de l'élément d'étranglement (48) sont reliées à une sortie de mélange d'air de refroidissement (43).

20. Dispositif selon les revendications 13 à 19, caractérisé en ce que chaque fois un nombre prédéterminé d'aubes (1) avec conduits de refroidissement (9) du rotor et/ou du stator d'un étage de turbomachine sont reliées à la sortie d'air froid (8) ou la sortie de mélange d'air de refroidissement (43) d'un conduit à turbulence (5).

21. Dispositif selon les revendications 13 à 19, caractérisé en ce que chaque aube du rotor et/ou du stator d'un étage de turbomachine, présentant des conduits de refroidissement (9), est reliée à la sortie d'air froid (8) ou la sortie de mélange d'air de refroidissement (43) d'un conduit à turbulence (5).

22. Aube pour une turbomachine qui est soumise à des contraintes thermiques pendant que la turbomachine est en service, et qui peut être refroidie par de l'air de refroidissement par l'intermédiaire des conduits de refroidissement (9) formés dans l'aube (1), l'air de refroidissement sortant par de petites découpures dans l'enveloppe de l'aube (22), caractérisé en ce que dans l'aube (1) est disposé un conduit à turbulence (5, 25) dont les buses d'admission (7), disposées tangentiellement dans la zone d'un élément d'étranglement (48) en forme d'obturateur, sont reliées à un conduit d'air de refroidissement (12), un courant partiel d'air de refroidissement de l'air de refroidissement de ces buses, après avoir traversé l'élément d'étranglement (48) en forme d'obturateur, en étant encore refroidi, est amené dans les conduits de refroidissement (9) de l'aube (1), et le courant partiel d'air de refroidissement restant sort comme air chaud et est évacué à travers une sortie d'air chaud (10) d'un élément d'étranglement (1) en forme de buse.

23. Aube selon la revendication 22, caractérisé en ce que le volume de turbulence (27) de l'enveloppe de la chambre à turbulence (24) du conduit à turbulence (25) avec des buses d'admission (7) dirigées tangentiellement, présente deux orifices de sortie de flux (29, 30) dirigés coaxialement à l'axe médian (28) de l'enveloppe de la chambre à turbulence (24), l'un de ces orifices étant relié à un diffuseur (33) et l'autre, à un élément d'étranglement (48) en forme d'obturateur.

24. Aube selon la revendication 23, caractérisé en ce que sur le diffuseur (33) est disposé un segment d'admission (51) en forme d'obturateur et/ou sur le segment d'extrémité (36) côté sortie, est disposé un autre élément d'étranglement (49) en forme d'obturateur.

25. Aube selon les revendications 22 à 24, caractérisé en ce que le conduit à turbulence (5, 25) est formé dans un tiroir (15) qui est disposé de manière démontable dans une aube (1).

EP 0 232 782 B1

Fig.1

9

Fig.2          Fig.3          Fig.4

EP 0 232 782 B1

Fig. 6b

Fig. 6a

Fig. 5

EP 0 232 782 B1